# EUROPÄISCHE PATENTSCHRIFT

(11) **EP 3 204 633 B1**
(45) Veröffentlichungstag und Bekanntmachung des Hinweises auf die Patenterteilung: **08.12.2021**
(21) Anmeldenummer: 15774931.8
(22) Anmeldetag: 07.10.2015
(51) Int. Cl.: F03D 1/06

(54) **WINDENERGIEANLAGEN-ROTORBLATT**
WIND TURBINE ROTOR BLADE
PALE DE ROTOR D'ÉOLIENNE

(30) Priorität: 07.10.2014 DE 102014220249
(43) Veröffentlichungstag der Anmeldung: 16.08.2017
(73) Patentinhaber: Wobben Properties GmbH, 26607 Aurich (DE)
(72) Erfinder: SPIETH, Falk, 26605 Aurich (DE)
(74) Vertreter: Eisenführ Speiser
(86) Internationale Anmeldenummer: PCT/EP2015/073095
(87) Internationale Veröffentlichungsnummer: WO 2016/055502

(56) Entgegenhaltungen:
- WO-A1-2011/070137
- CN-A- 102 011 711
- CN-A- 103 470 456
- US-A1- 2011 299 995
- US-A1- 2012 055 020
- None

## Beschreibung

Die vorliegende Erfindung betrifft ein Windenergieanlagen-Rotorblatt sowie eine Windenergieanlage. Ferner betrifft die vorliegende Erfindung ein Verfahren zum Verbinden eines ersten Rotorblattabschnitts mit einem zweiten Rotorblattabschnitt.

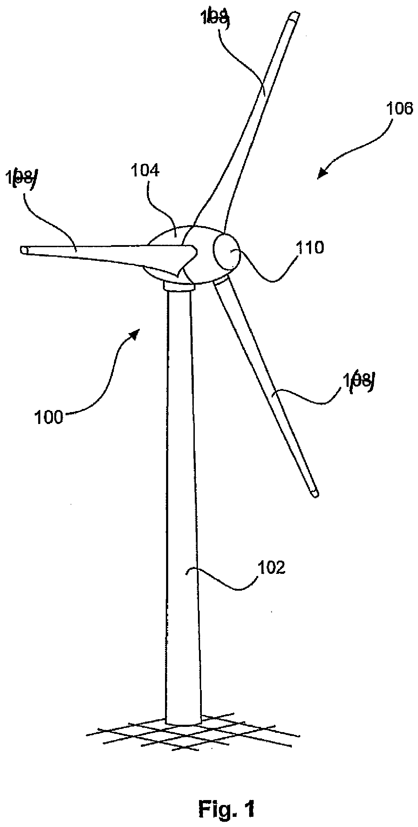

Windenergieanlagen sind allgemein bekannt und beispielsweise wie in Figur 1 ausgestaltet. Für die Effizienz einer Windenergieanlage ist insbesondere die Größe des bzw. der Rotorblätter ein wichtiger Aspekt. Um auch bei schwachen Winden eine ausreichend hohe Effizienz der Windenergieanlage zu erzielen, weisen dabei heutzutage Windenergieanlagen zunehmend größere Rotordurchmesser auf und somit auch längere Rotorblätter. Ein solches Rotorblatt weist beispielsweise eine Länge von 40 m und mehr auf. Bei solchen Größen gestaltet es sich zunehmend schwierig, diese Rotorblätter zu fertigen, zum Aufstellungsort zu transportieren und an die Rotornabe der Windenergieanlage am Aufstellungsort anzubringen. Um diese Probleme zu vermeiden, sind bereits Rotorblätter bekannt, die ein geteiltes Rotorblatt aufweisen. Das Rotorblatt ist dabei wenigstens in Rotorblattlängsachse in zwei Teile unterteilt, nämlich in einen inneren Teil, den Rotorblattinnenabschnitt, der an der Rotorblattnabe angebracht wird und in einen äußeren Teil, den Rotorblattaußenabschnitt, der eine Rotorblattspitze aufweist.

Solche in Richtung der Rotorblattlängsachse geteilten Rotorblätter weisen Verbindungsvorrichtungen zum Verbinden des Rotorblattinnenabschnitts mit dem Rotorblattaußenabschnitt auf. Die Verbindungsvorrichtungen sind dabei an hervorstehenden Stegen oder Ähnlichem vorgesehen. Dadurch wird eine an den einzelnen Rotorblattabschnitten wirkende Kraft in die hervorstehenden Stege umgeleitet, so dass ungünstige Kraftverhältnisse an der Verbindungsstelle wirken. Diese ungünstigen Kraftverhältnisse rufen lokale Biegemomente hervor, die zu einer Schädigung an der bzw. der Verbindungsstelle führen können. Zudem werden solche Verbindungsvorrichtungen üblicherweise nach dem Herstellen der einzelnen Rotorblattabschnitte an die Rotorblätter angebracht, so dass, um die Verbindungsvorrichtung in dem jeweiligen Rotorblattabschnitt anzubringen, Material von dem Rotorblatt entfernt werden muss. Um hierbei präzise arbeiten zu können werden häufig teure Maschinen bzw. Geräte benötigt. Zudem benötigt das nachträgliche Einbringen der Verbindungsvorrichtungen oftmals viel Zeit, wodurch sich der Aufbau der gesamten Windenergieanlage verzögert. Somit gestalten sich die bislang bekannten Verbindungen als teuer und zeitaufwendig.

In der prioritätsbegründenden deutschen Patentanmeldung hat das Deutsche Patent- und Markenamt die folgenden Dokumente recherchiert: EP 2 735 732 A2; DE 10 2013 205 965 A1; DE 38 79 287 T2; DE 10 2010 039 778 A1; EP 2 031 245 A2; DE 693 078 56 T2 und DE 695 347 67 T2.

US 2012/055020 A1 zeigt ein Windenergieanlagen-Rotorblatt mit einem Rotorblattinnenabschnitt und einem Rotorblattaußenabschnitt. Der Rotorblattinnenabschnitt und der Rotorblattaußenschnitt werden mittels Verbindungselementen miteinander verbunden.

WO 2011/070137 A1 zeigt ein Windenergieanlagen-Rotorblatt, welches aus zwei Teilen besteht, wobei die beiden Teile mittels Verbindungselementen miteinander verbunden sind.

CN 103470456 zeigt ein mehrteiliges Rotorblatt, wobei die verschiedenen Teile des Rotorblattes über Verbindungselemente miteinander verbunden sind.

CN 102011711 beschreibt ein mehrteiliges Rotorblatt einer Windenergieanlage, wobei die Teile des Rotorblattes über Verbindungselemente miteinander verbunden sind.

US 2011/299995 A1 zeigt ein Windenergieanlagen-Rotorblatt, welches aus mehreren Teilen besteht, wobei die Teile mittels Verbindungselementen miteinander verbunden sind.

Der vorliegenden Erfindung liegt somit die Aufgabe zugrunde, wenigstens eines der oben genannten Probleme zu adressieren, insbesondere soll eine Lösung vorgeschlagen werden, die die Verbindung von zwei Rotorblattabschnitten eines Rotorblatts einer Windenergieanlage bei gleichzeitiger Zeitersparnis beim Aufbau der Windenergieanlage weiter verbessert, insbesondere stabilisiert. Zumindest soll eine alternative Lösung geschaffen werden.

Zur Lösung der Aufgabe wird ein Windenergieanlagen-Rotorblatt gemäß Anspruch 1 vorgeschlagen.

Das Rotorblatt umfasst wenigstens einen Rotorblattinnenabschnitt mit einem Anschlussbereich zur Rotorblattnabe und wenigstens einen Rotorblattaußenabschnitt mit einer Rotorblattspitze. Dabei sind der Rotorblattinnenabschnitt und der Rotorblattaußenabschnitt jeweils im Wesentlichen aus einem faserverstärkten Kunststoff hergestellt und der Rotorblattinnenabschnitt und der Rotorblattaußenabschnitt sind durch wenigstens eine Verbindungsvorrichtung miteinander verbunden. Dabei umfasst die wenigstens eine Verbindungsvorrichtung einen zumindest teilweise in den faserverstärkten Kunststoff des Rotorblattinnenabschnitts eingewickelten Inneneinsatz und einen zumindest teilweise in den faserverstärkten Kunststoff des Rotorblattaußenabschnitts eingearbeiteten Außeneinsatz. Der Inneneinsatz und der Außeneinsatz sind dabei über wenigstens ein Verbindungselement miteinander verbunden.

Der Inneneinsatz weist eine innere Anlagefläche und der Außeneinsatz weist eine äußere Anlagefläche auf, welche parallel zueinander angeordnet sind und eine Ebene bilden, die in einem Winkel α von > 30° und < 80° zur Rotorblattlängsachse angeordnet ist.

Das Rotorblatt weist einen Innenraum innerhalb des Rotorblattinnenabschnitts und des Rotorblattaußenabschnitts auf. Das Verbindungselement reicht durch eine in dem Inneneinsatz vorgesehene Durchgangsbohrung hindurch und ist in einer in dem Außeneinsatz vorgesehenen Sackbohrung befestigt. Das Verbindungselement weist ein erstes und zweites Ende auf. Das zweite Ende erstreckt sich in den Innenraum hinein. Das erste Ende des Verbindungselementes ist in der Sackbohrung angeordnet.

Der Rotorblattinnenabschnitt und/oder Rotorblattaußenabschnitt sind dabei insbesondere aus einem glasfaserverstärkten Kunststoff und/oder kohlenstofffaserverstärkten Kunststoff hergestellt. Der Rotorblattinnenabschnitt und/oder Rotorblattaußenabschnitt ist dabei insbesondere durch ein Wickelverfahren oder ein Vakuum-Infusionsverfahren hergestellt. Die Verbindungsvorrichtung wird insbesondere bei dem Herstellungsprozess des jeweiligen Rotorblattabschnitts, also des Rotorblattinnenabschnitts und des Rotorblattaußenabschnitts, integriert, also eingearbeitet, eingewickelt, eininfundiert oder einlaminiert. Der Inneneinsatz ist demnach Teil des Rotorblattinnenabschnitts und der Außeneinsatz Teil des Rotorblattaußenabschnitts. Das wenigstens eine Verbindungselement wird dabei separat in den Außeneinsatz bzw. Inneneinsatz eingeführt. Das wenigstens eine Verbindungselement ist demnach nicht Teil des Rotorblattinnenabschnitts und/oder Rotorblattaußenabschnitts. Das wenigstens eine Verbindungselement stellt die Verbindung zwischen dem Inneneinsatz und dem Außeneinsatz her, und somit zwischen dem Rotorblattinnenabschnitt und dem Rotorblattaußenabschnitt. Der Inneneinsatz und der Außeneinsatz liegen nach der Verbindung so aneinander, dass die an dem Verbindungsbereich wirkende Kraft direkt von dem Inneneinsatz in den Außeneinsatz bzw. umgekehrt geleitet wird. Vorteilhafterweise findet somit nur eine geringe bzw. nahezu keine Kraftumleitung in dem Verbindungsbereich statt. Somit werden lokale Biegemomente verringert bzw. sogar vermieden. Schädigungen im Verbindungsbereich werden somit ebenfalls vermieden. Zudem können durch ein automatisiertes Wickelverfahren für verschiedene Windenergieanlagen unterschiedliche Rotorblätter mit einem an die Geometrie des Rotorblatts angepassten Inneneinsatz und Außeneinsatz gefertigt werden, die den unterschiedlich wirkenden Lasten standhalten können. Die Fertigung eines solchen Rotorblatts ist zudem wenig zeitaufwendig.

Insbesondere ist der Inneneinsatz in den faserverstärkten Kunststoff des Rotorblattinnenabschnitts zumindest teilweise eingewickelt. Insbesondere der Rotorblattinnenabschnitt ist über ein, insbesondere automatisiertes, Wickelverfahren hergestellt. Dabei werden Fasern um einen Körper bzw. Kern, der dem Rotorblattinnenabschnitt seine spätere Form gibt, gewickelt. Der Inneneinsatz wird dabei an einer vorbestimmten Position angeordnet und mit den Fasern eingewickelt. Die Fasern werden dabei straff, eng und mit einer hohen Maßgenauigkeit aneinander liegend positioniert, so dass der Rotorblattinnenabschnitt eine gute Qualität und lange Lebensdauer aufweist. Ein nachträgliches Anbringen einer Verbindungsvorrichtung durch spanende Verarbeitung ist demnach nicht mehr notwendig.

In einer bevorzugten Ausführungsform ist der Außeneinsatz in den faserverstärkten Kunststoff des Rotorblattaußenabschnitts zumindest teilweise einlaminiert, insbesondere über ein Vakuuminfusionsverfahren einlaminiert. Durch das Vakuuminfusionsverfahren wird durch eine nahezu blasenfreie Tränkung der Fasern eine hohe Qualität des Rotorblattaußenabschnitts sowie eine gute Reproduzierbarkeit erzielt.

Erfindungsgemäß reicht das wenigstens eine Verbindungselement durch eine in dem Inneneinsatz vorgesehene Durchgangsbohrung hindurch und ist in einer in dem Außeneinsatz vorgesehenen Sackbohrung befestigt.

Das wenigstens eine Verbindungselement ist dabei insbesondere als Schraube oder Bolzen mit Gewinde o.ä. ausgeführt. Über den Umfang des Rotorblatts in dem Verbindungsbereich sind insbesondere mehrere Innen- und Außeneinsätze vorgesehen. Die Anzahl der Inneneinsätze entspricht dabei der Anzahl der Außeneinsätze. Es sind dabei ein Verbindungselement oder mehrere Verbindungselemente in dem jeweiligen Inneneinsatz und/oder Außeneinsatz vorgesehen. Alternativ ist ein Inneneinsatz und ein Außeneinsatz in dem Rotorblattinnenabschnitt bzw. Rotorblattaußenabschnitt angeordnet. Der Inneneinsatz und der Außeneinsatz sind dabei mit mehreren Verbindungselementen verbunden, insbesondere mit mehr als einhundert Verbindungselementen. In der Sackbohrung ist insbesondere ein Innengewinde vorgesehen, in dem das Verbindungselement eingeschraubt wird und dadurch mit dem Außeneinsatz befestigbar ist. Durch die Verschraubungen werden der Rotorblattaußenabschnitt und der Rotorblattinnenabschnitt zusammengehalten.

Eine solche vergleichsweise einfache Konstruktion kann dadurch realisiert werden, dass der Außeneinsatz und der Inneneinsatz in den Rotorblattaußenabschnitt bzw. Rotorblattinnenabschnitt zumindest teilweise eingewickelt sind und somit fest in dem Rotorblattaußenabschnitt bzw. Rotorblattinnenabschnitt befestigt sind. Der Bereich, in dem das Verbindungselement angeordnet ist, ist zumindest teilweise nicht eingewickelt. Zumindest der Bereich, in dem das Verbindungselement eingeführt wird ist weiterhin zugänglich, so dass ein Austausch des Verbindungselements möglich ist. Dadurch werden Reparaturarbeiten an dem Rotorblatt, insbesondere in dem Verbindungsbereich vereinfacht.

In einer bevorzugten Ausführungsform ist der Inneneinsatz und/oder der Außeneinsatz aus einem Gusswerkstoff und/oder aus einem Metall hergestellt. Dadurch, dass der Rotorblattinnenabschnitt und der Rotorblattaußenabschnitt im Wesentlichen aus faserverstärkten Kunststoffen hergestellt ist, kann eine bei Rotorblättern komplexe Struktur bei gleichzeitiger Leichtbauweise realisiert werden. Sind nur die Krafteinleitungselemente, also der Inneneinsatz und der Außeneinsatz aus einem Gusswerkstoff, insbesondere aus Gusseisen oder Stahlguss, oder Metall, insbesondere aus Stahl hergestellt, können die sich aus der Bauweise mit faserverstärkten Kunststoffen ergebenden Vorteile bei gleichzeitig verhältnismäßig einfacher Konstruktion des Verbindungsbereichs weiterhin genutzt werden.

Zudem herrscht in einem solchen Verbindungsbereich ein multiaxialer Spannungszustand vor, der aus verschiedenen Spannungen wie Längs-, Quer- und Schubspannungen resultiert. Metalle weisen dabei ein isotropes Werkstoffverhalten auf. Die Eigenschaften des Außeneinsatzes und des Inneneinsatzes sind demnach richtungsunabhängig. Dies ist bei dem vorherrschenden multiaxialen Spannungszustand besonders vorteilhaft. Faserverstärkte Kunststoffe weisen hingegen ein orthotropes Werkstoffverhalten auf. Die Eigenschaften sind demnach richtungsabhängig. Einen optimalen Aufbau des faserverstärkten Kunststoff an dieser Stelle zu realisieren wäre daher extrem aufwendig und kompliziert.

Weiterhin lassen sich Materialien wie Gusseisen oder Stahl einfacher weiterverarbeiten als Faserverbundwerkstoffe. Insbesondere bei Bohrungen in Faserverbundwerkstoffen besteht die Gefahr, dass das Material beschädigt wird. Zudem können Bohrlöcher mit schlechter Qualität entstehen, die aufwändig per Hand nachbearbeitet werden müssen. Somit können die entsprechenden Bohrungen in dem aus Metall und/oder Gusswerkstoffen hergestellten Inneneinsatz und Außeneinsatz vorgesehen werden, ohne dabei auf die genannten Probleme zu stoßen. Eine aufwendige Nachbearbeitung wird somit vermieden.

In einer besonders bevorzugten Ausführungsform weist der Inneneinsatz einen Wickelabschnitt auf, der vollständig in den Rotorblattinnenabschnitt eingewickelt ist, und einen Verbindungsinnenabschnitt, der gemeinsam mit dem Wickelabschnitt den Inneneinsatz bildet und in dem das Verbindungselement aufgenommen ist. Der Wickelabschnitt und der Verbindungsinnenabschnitt sind demnach insbesondere einstückig ausgeführt. Der Wickelabschnitt und der Verbindungsinnenabschnitt weisen insbesondere verschiedene Geometrien auf. Die verschiedenen Ausführungen des Wickelabschnitts und des Verbindungsinnenabschnitts sind entsprechend an die jeweilige Funktion des Wickelabschnitts bzw. des Verbindungsinnenabschnitts angepasst. Der Wickelabschnitt ist dabei zum Befestigen in den Rotorblattinnenabschnitt vorgesehen. Der Verbindungsinnenabschnitt zum Aufnehmen des Verbindungselements und zum Verbinden des Inneneinsatzes und des Außeneinsatzes und somit zum Weiterleiten der in dem Rotorblatt auftretenden Last. Der Wickelabschnitt ist dabei insbesondere länglich ausgeführt und in Richtung einer Rotorblattlängsachse angeordnet. Durch die längliche Ausführung und die Anordnung in Richtung der Rotorblattlängsachse ist ein ausreichend großer Bereich in den faserverstärkten Kunststoff des Rotorblattinnenabschnitts eingewickelt, so dass der Inneneinsatz stabil in dem Rotorblattinnenabschnitt angeordnet ist.

Der Verbindungsinnenabschnitt ist bei einem einzigen Inneneinsatz, der sich über den Umfang des Rotorblattinnenabschnitts erstreckt, insbesondere ringförmig ausgeführt und teilweise in den Rotorblattinnenabschnitt eingewickelt. Durch die ringförmige Ausführungsform wird der faserverstärkte Kunststoff beim einwickeln nicht beschädigt. Die Materialeigenschaften werden demnach nicht gestört. Der Verbindungsinnenabschnitt des Rotorblattinnenabschnitts und ein entsprechend ausgeführtes Teil des Rotorblattaußenabschnitts liegen bei einer Verbindung der Rotorblattabschnitte aufeinander. Der Verbindungsinnenabschnitt weist dabei eine größere Materialstärke als der Wickelabschnitt auf. Dadurch ist der Verbindungsinnenabschnitt besonders gut geeignet, um die an dem Verbindungsbereich des Rotorblattinnenabschnitts und des Rotorblattaußenabschnitts auftretenden Kräfte aufzunehmen. Der Zugang zu dem Verbindungselement ist dabei insbesondere nicht in den Rotorblattinnenabschnitt eingewickelt. Dadurch ist das Verbindungselement auch noch nach dem Zusammenbau des Rotorblattinnenabschnitts mit dem Rotorblattaußenabschnitt auswechselbar. Vorzugsweise ist innerhalb des Rotorblattinnenabschnitts ein erster Innenraum vorgesehen und innerhalb des Rotorblattaußenabschnitts ein zweiter Innenraum vorgesehen, und der Verbindungsinnenabschnitt bzw. Verbindungsaußenabschnitt ist zumindest teilweise in dem ersten bzw. zweiten Innenraum angeordnet, insbesondere das Verbindungselement ist in dem ersten bzw. zweiten Innenraum angeordnet, derart, dass das Verbindungselement auswechselbar ist. Dadurch, dass der Verbindungsinnenabschnitt und/oder Verbindungsaußenabschnitt in den ersten Innenraum bzw. zweiten Innenraum hinein ragt, ist dieser zugänglich und somit ist das darin angeordnete Verbindungselement auswechselbar. Der Verbindungsinnenabschnitt und/oder Verbindungsaußenabschnitt ist demnach zumindest teilweise innerhalb des Rotorblattinnenabschnitts bzw. innerhalb des Rotorblattaußenabschnitts angeordnet. Teilweise kann der Verbindungsinnenabschnitt und/oder Verbindungsaußenabschnitt in dem Rotorblattinnenabschnitt bzw. Rotorblattaußenabschnitt angeordnet sein. Dadurch wird die Umströmung des Rotorblatts bzw. das aerodynamische Verhalten des Rotorblatts nicht durch die Verbindungsvorrichtung beeinflusst. Zudem ist die Verbindungsvorrichtung vor äußeren Einflüssen geschützt. Ein Auswechseln des Verbindungselements ist einfach zu realisieren.

In einer bevorzugten Ausführungsform weist der Außeneinsatz einen Laminierabschnitt auf, der vollständig in den Rotorblattaußenabschnitt einlaminiert ist, und einen Verbindungsaußenabschnitt, der gemeinsam mit dem Laminierabschnitt den Außeneinsatz bildet und in dem das Verbindungselement aufgenommen ist. Der Außeneinsatz ist dadurch im Wesentlichen über den Laminierabschnitt in dem Rotorblattaußenabschnitt befestigt. Der Laminierabschnitt ist insbesondere ähnlich bzw. nahezu identisch zu dem Wickelabschnitt des Rotorblattinnenabschnitts ausgeführt, nämlich länglich und in Richtung der Rotorblattlängsachse angeordnet. Der Laminierabschnitt und der Verbindungsaußenabschnitt sind dabei insbesondere einstückig ausgeführt. Der Laminierabschnitt ist demnach vollständig in den Rotorblattaußenabschnitt eingearbeitet und befestigt somit den Außeneinsatz in dem Rotorblattaußenabschnitt. Der Verbindungsaußenabschnitt nimmt die am Verbindungsbereich auftretenden Kräfte auf. Der Verbindungsaußenabschnitt ist dabei bei einem Außeneinsatz, der sich über den gesamten Umfang des Rotorblattaußenabschnitts erstreckt, insbesondere ringförmig ausgeführt. In einer alternativen Ausführungsform, nämlich wenn mehrere Innen- und Außeneinsätze über den Umfang des Blattinnenabschnitts bzw. des Blattaußenabschnitts verteilt sind, ist der Verbindungsinnenabschnitt und/oder der Verbindungsaußenabschnitt insbesondere zylinderförmig ausgeführt.

Gemäß der Erfindung weist der Verbindungsinnenabschnitt eine innere Anlagefläche auf und der Verbindungsaußenabschnitt eine äußere Anlagefläche und die innere Anlagefläche und die äußere Anlagefläche sind parallel zueinander angeordnet. Durch die parallele Anordnung der inneren und der äußeren Anlagefläche zueinander, liegen diese bei einer Verbindung des Rotorblattinnenabschnitts und des Rotorblattaußenabschnitts genau aufeinander. Insbesondere liegen dabei die Durchgangsbohrung in dem Rotorblattinnenabschnitt und die Sackbohrung in dem Rotorblattaußenabschnitt exakt übereinander, so dass das Verbindungselement problemlos durch die Durchgangsbohrung in die Sackbohrung eingeführt werden kann. Dadurch wird eine stabile Verbindung hergestellt. Die innere und die äußere Anlagenfläche sind dabei in einem von der Rotorblattlängsachse abweichenden Winkel angeordnet, nämlich in einem Winkel alpha > 30° und < 80° in Relation zur Rotorblattlängsachse. Dadurch, dass die innere und äußere Anlagefläche eine Ebene bilden, welche in einem Winkel α zu der Rotorblattlängsachse angeordnet ist, ist auch eine Längsachse des Verbindungselementes in einem Winkel β < 60° und > 10° zu der Rotorblattlängsachse angeordnet. Die Längsachse des Verbindungselementes steht senkrecht auf der Ebene der Anlageflächen. Das frei Ende des Verbindungselementes weist in einen Innenraum des Rotorblattes hinein, so dass die Verbindungselemente aus dem Innenraum des Rotorblattes heraus gewartet bzw. erneuert werden können.

Durch Auswahl des Winkels α wird auch der Winkel β mit beeinflusst. Durch den Winkel β wird bestimmt, wie weit das freie Ende des Verbindungselementes in den Innenraum des Rotorblattes hineinragt.

In einer besonders bevorzugten Ausführungsform ist zwischen der Durchgangsbohrung und dem Verbindungselement eine Dehnhülse angeordnet. Durch die Dehnhülse wird die Klemmlänge des Verbindungselements verlängert. Dadurch wird die Schraubenzusatzkraft gesenkt. Beim Auftreten leichter Materialermüdungserscheinungen, wenn beispielsweise das Material des Rotorblattinnenabschnitts und/oder des Rotorblattaußenabschnitts etwas nachgibt, wirkt eine solche Dehnhülse der Materialermüdung entgegen. Materialermüdungserscheinungen werden somit reduziert.

Weiterhin wird eine nicht beanspruchte Verbindungsvorrichtung zum Verbinden eines Rotorblattinnenabschnitts mit einem Rotorblattaußenabschnitt eines Rotorblatts nach einem der vorstehend beschriebenen Ausführungsformen vorgeschlagen. Das Rotorblatt umfasst einen in den Rotorblattaußenabschnitt zumindest teilweise einzuwickelnden Außeneinsatz, einen in den Rotorblattinnenabschnitt zumindest teilweise einzulaminierenden Inneneinsatz und ein durch den Inneneinsatz hindurch reichendes und in dem Außeneinsatz zu befestigendes Verbindungselement. Es ergeben sich somit die Zusammenhänge, Erläuterungen und Vorteile gemäß wenigstens einer Ausführungsform des beschriebenen Rotorblatts.

Zudem wird eine Windenergieanlage mit wenigstens einem Rotorblatt nach wenigstens einem der vorab beschriebenen Ausführungsformen mit einer Verbindungsvorrichtung, vorzugsweise mit drei Rotorblättern nach wenigstens einem der vorab beschriebenen Ausführungsformen mit einer Verbindungsvorrichtung vorgeschlagen. Es ergeben sich somit die Zusammenhänge, Erläuterungen und Vorteile gemäß wenigstens einer Ausführungsform des beschriebenen Rotorblatts.

Zudem wird ein Verfahren zum Verbinden eines Rotorblattinnenabschnitts mit einem Rotorblattaußenabschnitt eines Rotorblatts einer Windenergieanlage nach einem der vorab beschriebenen Ausführungsformen vorgeschlagen. Das Verfahren ist im Anspruch 9 definiert.

Nachfolgend wird die Erfindung exemplarisch anhand eines Ausführungsbeispiels unter Bezugnahme auf die begleitende Figur näher erläutert.
- Fig. 1: zeigt eine Windenergieanlage schematisch in einer perspektivischen Ansicht, und
- Fig. 2: zeigt schematisch eine Schnittansicht eines Rotorblatts in einem Verbindungsbereich.

Die Erläuterungen der Erfindung anhand von Beispielen unter Bezugnahme auf die Figur erfolgt im Wesentlichen schematisch und die Elemente, die in der Figur erläutert werden, können darin zur besseren Veranschaulichung überzeichnet und andere Elemente vereinfacht sein.

Fig. 1 zeigt eine Windenergieanlage 100 mit einem Turm 102 und einer Gondel 104. An der Gondel 104 ist ein Rotor 106 mit drei Rotorblättern 1 und einem Spinner 110 angeordnet. Der Rotor 106 wird im Betrieb durch den Wind in eine Drehbewegung versetzt und treibt dadurch einen Generator in der Gondel 104 an.

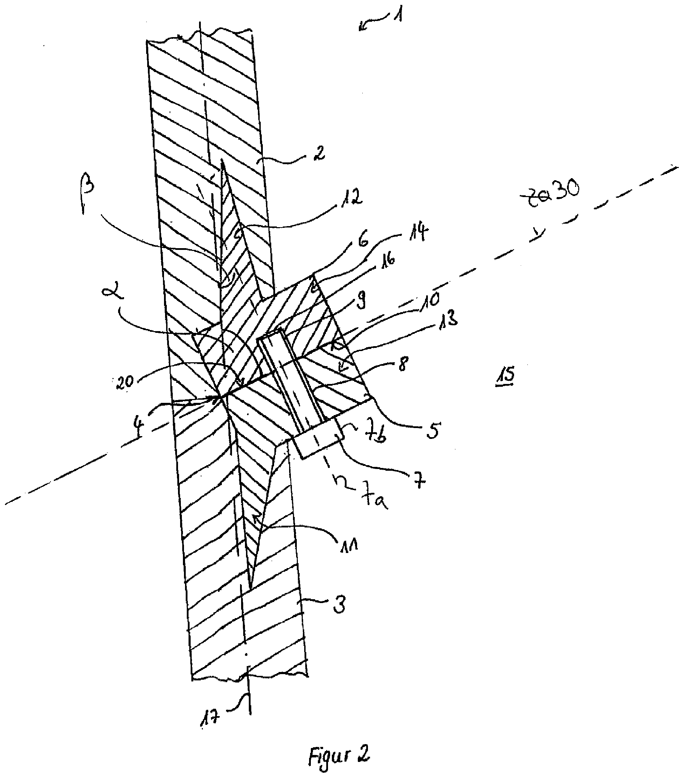

Fig. 2 zeigt schematisch einen Ausschnitt eines Verbindungsbereichs eines Rotorblatts 1 in einer Schnittansicht. Es ist ein Rotorblattaußenabschnitt 2 und ein Rotorblattinnenabschnitt 3 zu erkennen, die über eine Verbindungsvorrichtung 4 miteinander verbunden sind. Die Verbindungsvorrichtung 4 weist einen Inneneinsatz 5 und ein Außeneinsatz 6 auf. Der Außeneinsatz 6 und der Inneneinsatz 5 sind durch eine Schraube 7 als Ausführungsbeispiel eines Verbindungselements miteinander verbunden. Die Schraube 7 ist durch eine Durchgangsbohrung 8 in dem Inneneinsatz 5 durchgeführt und in einer in dem Außeneinsatz 6 vorgesehenen Sackbohrung 16 mit Innengewinde 9 verschraubt. Der Inneneinsatz 5 weist eine erste oder innere Anlagefläche 10 und der Außeneinsatz 6 weist eine zweite oder äußere Anlagefläche 20 auf. Die Anlageflächen 10, 20 liegen dabei plan aufeinander und bilden eine Ebene 30. Diese Ebene 20 ist in einem Winkel α (alpha > 30° und < 80°) zur Rotorblattlängsachse 17 angeordnet.

Der Inneneinsatz 5 weist einen Wickelabschnitt 11 und einen Verbindungsinnenabschnitt 13 auf. Der Wickelabschnitt 11 des Inneneinsatzes 5 ist dabei in den Rotorblattinnenabschnitt 3 eingewickelt. In dem Verbindungsinnenabschnitt 13 ist die Durchgangsbohrung 8 mit der Schraube 7 vorgesehen. Die Durchgangsbohrung 8 führt dabei von einem Innenraum 15 des Rotorblatts bis zur inneren Anlagefläche 10. Entsprechend weist der Außeneinsatz 6 einen Verbindungsaußenabschnitt 14 auf, der mit einem Laminierabschnitt 12 verbunden ist. Der Laminierabschnitt 12 ist in den Rotorblattaußenabschnitt 2 eingearbeitet, insbesondere einlaminiert. Der Verbindungsaußenabschnitt 14 des Befestigungselements 6 weist eine Sackbohrung 16 mit Innengewinde 9 auf. Die Sackbohrung 16 beginnt bei der äußeren Anlagefläche 20 des Außeneinsatzes 6 und endet in dem Verbindungsaußenabschnitt 14. In das Innengewinde 9 ist die Schraube 7 eingeschraubt, also die Schraube 7 ist demnach in dem Verbindungsaußenabschnitt 14 des Außeneinsatzes 6 befestigt. Durch die Schraube 7 ist der Inneneinsatz 3 und der Außeneinsatz 6 und somit der Rotorblattaußenabschnitt 2 mit dem Rotorblattinnenabschnitt 3 verbunden. Die Schraube 7 weist dabei in den Innenraum 15 des Rotorblatts 1. Dadurch ist die Schraube 7 frei zugänglich und kann bei einer Schädigung oder innerhalb eines Wartungsintervalls ausgewechselt werden.

Die Schraube 7 weist eine Längsachse 7a auf, welche senkrecht zur Ebene 30 steht und in einem Winkel β zu der Rotorblattlängsachse 17 angeordnet ist. Durch diesen Winkel ragt das freie Ende 7b der Schraube 7 aus dem Rotorblatt 1 heraus. Hierbei weist der Schraubenkopf 7b in ein Inneres in dem Innenraum 15 des Rotorblatts 1 hinein. Damit kann die Schraube 7 aus dem Innenraum 15 des Rotorblatts 1 heraus gewartet bzw. ersetzt werden. Dies hat ferner den Vorteil, dass die Schrauben 7 durch äußere Einflüsse innerhalb des Innenraums 15 des Rotorblatts 1 geschützt sind. Durch Auswahl der Winkel α und β wird bestimmt, wie der Schraubenkopf 7a in den Innenraum hineinragt.

Der Laminierabschnitt 12 des Außeneinsatzes 6 und der Wickelabschnitt 11 des Inneneinsatzes 5 sind jeweils als länglicher Teilkörper ausgeführt, der spitz zuläuft. Der Wickelabschnitt 11 und der Laminierabschnitt 12 sind dabei im Wesentlichen entlang einer Rotorblattlängsachse 17 des Rotorblatts 1 in dem Inneneinsatz 5 bzw. Außeneinsatz 6 angeordnet. Durch diese Anordnung wird die an dem Verbindungsbereich auftretende Last nahezu ohne Umleitung, also in einer nahezu parallelen Anordnung zu der Rotorblattlängsachse 17 geleitet.

Da die Laminierabschnitte 12, 11 im Wesentlichen parallel zu der Rotorblattlängsachse 17 angeordnet sind, sind die innere Anlagefläche und die äußere Anlagefläche, welche eine Ebene 30 aufspannen, in einem Winkel α zu den beiden Laminierabschnitten 11, 12 angeordnet. Der Winkel α ist hierbei kleiner als 80° und größer als 30°.

Der Verbindungsinnenabschnitt 13 und der Verbindungsaußenabschnitt 14 ist jeweils ringförmig ausgeführt. In einer alternativen Ausführungsform, nämlich wenn mehrere Innen- und Außeneinsätze über den Umfang des Blattinnenabschnitts bzw. des Blattaußenabschnitts verteilt sind, ist der Verbindungsinnenabschnitt und der Verbindungsaußenabschnitt insbesondere zylinderförmig ausgeführt. Der Verbindungsinnenabschnitt 13 und der Verbindungsaußenabschnitt 14 und der Wickelabschnitt 11 bzw. Laminierabschnitt 12 sind einstückig ausgeführt und bilden gemeinsam den Inneinsatz 5 bzw. Außeneinsatz 6.

## Patentansprüche

1. Windenergieanlagen-Rotorblatt, mit:
- einer Rotorblattlängsachse (17),
- wenigstens einem Rotorblattinnenabschnitt (3) mit einem Anschlussbereich zur Rotorblattnabe und
- wenigstens einem Rotorblattaußenabschnitt (2) mit einer Rotorblattspitze,
- einem Innenraum (15) innerhalb des Rotorblattinnenabschnitts (3) und des Rotorblattaußenabschnitts (2),
wobei der Rotorblattinnenabschnitt (3) und der Rotorblattaußenabschnitt (2) jeweils im Wesentlichen aus einem faserverstärkten Kunststoff hergestellt sind, und wobei der Rotorblattinnenabschnitt (3) und der Rotorblattaußenabschnitt (2) durch wenigstens eine Verbindungsvorrichtung (4) miteinander verbunden sind, und wobei die wenigstens eine Verbindungsvorrichtung (4) umfasst:
- einen zumindest teilweise in den faserverstärkten Kunststoff des Rotorblattinnenabschnitts (3) eingewickelten Inneneinsatz (5) mit einer inneren Anlagefläche (10),
- einen zumindest teilweise in den faserverstärkten Kunststoff des Rotorblattaußenabschnitt (2) eingearbeiteten Außeneinsatz (6) mit einer äußeren Anlagefläche (20),
wobei der Inneneinsatz (5) und der Außeneinsatz (6) über die innere und äußere Anlagefläche (10, 20) und wenigstens ein Verbindungselement (7) miteinander verbunden sind,
wobei die innere Anlagefläche (10) und die äußere Anlagefläche (20) parallel zueinander angeordnet sind und eine Ebene (30) bilden, wobei
die Ebene (30) in einem Winkel (a) > 30° und < 80° zur Rotorblattlängsachse (17) angeordnet ist,
wobei das wenigstens eine Verbindungselement ein erstes und zweites Ende aufweist,
wobei sich das zweite Ende in den Innenraum hinein erstreckt,
wobei das Verbindungselement (7) durch eine in dem Inneneinsatz (5) vorgesehene Durchgangsbohrung (8) hindurch reicht und in einer in dem Außeneinsatz (6) vorgesehenen Sackbohrung (16) befestigt ist, wobei das erste Ende des Verbindungselementes in der Sackbohrung angeordnet ist.

2. Windenergieanlagen-Rotorblatt nach Anspruch 1, **dadurch gekennzeichnet, dass** der Außeneinsatz (6) in den faserverstärkten Kunststoff des Rotorblattaußenabschnitts (2) zumindest teilweise einlaminiert ist, insbesondere über ein Vakuuminfusionsverfahren einlaminiert ist.

3. Windenergieanlagen-Rotorblatt nach einem der vorstehenden Ansprüche, **dadurch gekennzeichnet, dass** der Inneneinsatz (5) und/oder der Außeneinsatz (6) aus einem Gusswerkstoff und/oder aus einem Metall, hergestellt ist.

4. Windenergieanlagen-Rotorblatt nach einem der vorstehenden Ansprüche, **dadurch gekennzeichnet, dass** der Inneneinsatz (5) einen Wickelabschnitt aufweist, der vollständig in den Rotorblattinnenabschnitt (3) eingewickelt ist, und einen Verbindungsinnenabschnitt aufweist, der gemeinsam mit dem Wickelabschnitt den Inneneinsatz (5) bildet und in dem das Verbindungselement aufgenommen ist.

5. Windenergieanlagen-Rotorblatt nach Anspruch 4, **dadurch gekennzeichnet, dass** innerhalb des Rotorblattinnenabschnitts (3) ein Innenraum (15) vorgesehen ist, und der Verbindungsinnenabschnitt (13) zumindest teilweise in dem Innenraum angeordnet ist, insbesondere das Verbindungselement (7) in dem Innenraum (15) angeordnet ist, derart, dass das Verbindungselement auswechselbar ist.

6. Windenergieanlagen-Rotorblatt nach einem der vorstehenden Ansprüche, **dadurch gekennzeichnet, dass** der Außeneinsatz (6) einen Laminierabschnitt (12) aufweist, der vollständig in den Rotorblattaußenabschnitt (2) einlaminiert ist, und einen Verbindungsaußenabschnitt (14) aufweist, der gemeinsam mit dem Laminierabschnitt (12) den Außeneinsatz (6) bildet und in dem das Verbindungselement (7) aufgenommen ist.

7. Windenergieanlagen-Rotorblatt nach einem der Ansprüche 2 bis 6, **dadurch gekennzeichnet, dass** zwischen der Durchgangsbohrung und dem Verbindungselement (7) eine Dehnhülse angeordnet ist.

8. Windenergieanlage mit wenigstens einem Rotorblatt nach einem der Ansprüche 1 bis 7 mit wenigstens einer Verbindungsvorrichtung (4), vorzugsweise mit drei Rotorblättern nach einem der Ansprüche 1 bis 7, jeweils mit wenigstens einer Verbindungsvorrichtung (4).

9. Verfahren zum Verbinden eines Rotorblattinnenabschnitts (3) mit einem Rotorblattaußenabschnitt (2) eines Rotorblatts einer Windenergieanlage nach einem der Ansprüche 1 bis 7, umfassend die Schritte:
- Bereitstellen eines Außeneinsatzes (6), eines Inneneinsatzes (5) und wenigstens eines Verbindungselements (7),
- zumindest teilweises Einlaminieren des Außeneinsatzes (6) in den Rotorblattaußenabschnitt (2) und
- zumindest teilweises Einwickeln des Inneneinsatzes (5) in den Rotorblattinnenabschnitt (3),
- Verbinden des Rotorblattinnenabschnitts (3) mit dem Rotorblattaußenabschnitt (2) durch Einführen des wenigstens einen Verbindungselements (7) über den Inneneinsatz (5) in den Außeneinsatz (6) und Befestigen in dem Außeneinsatz (6),
wobei der Inneneinsatz (5) und der Außeneinsatz (6) über die innere und äußere Anlagefläche (10, 20) und wenigstens ein Verbindungselement (7) miteinander verbunden sind,
wobei die innere Anlagefläche (10) und die äußere Anlagefläche (20) parallel zueinander angeordnet sind und eine Ebene (30) bilden, wobei die Ebene (30) in einem Winkel (a) > 30° und < 80° zur Rotorblattlängsachse (17) angeordnet ist,
wobei das wenigstens eine Verbindungselement ein erstes und zweites Ende aufweist,
wobei sich das zweite Ende in den Innenraum hinein erstreckt,
wobei das Verbindungselement (7) durch eine in dem Inneneinsatz (5) vorgesehene Durchgangsbohrung (8) hindurch reicht und in einer in dem Außeneinsatz (6) vorgesehenen Sackbohrung (16) befestigt ist, wobei das erste Ende des Verbindungselementes in der Sackbohrung angeordnet ist.

## Claims

1. Wind-turbine rotor-blade, having:
- a rotor-blade longitudinal axis (17),
- at least one rotor-blade inner portion (3), having a region connecting to the rotor-blade hub, and
- at least one rotor-blade outer portion (2), having a rotor-blade tip,
- an interior space (15) inside the rotor-blade inner portion (3) and the rotor-blade outer portion (2),
the rotor-blade inner portion (3) and the rotor-blade outer portion (2) each be made substantially of a fibre-reinforced plastic, and
the rotor-blade inner portion (3) and the rotor-blade outer portion (2) being connected to each other by at least one connecting device (4), and the at least one connecting device (4) comprising:
- an inner insert (5) that is at least partially wrapped in the fibre-reinforced plastic of the rotor-blade inner portion (3) and that has an inner contact face (10),
- an outer insert (6) that is at least partially incorporated in the fibre-reinforced plastic of the rotor-blade outer portion (2) and that has an outer contact face (20),
the inner insert (5) and the outer insert (6) being connected to each other via the inner and the outer contact face (10, 20) and at least one connecting element (7), the inner contact face (10) and the outer contact face (20) being arranged parallelwise in relation to each other and forming a plane (30) that is at an angle (a) of > 30° and < 80°, in relation to the rotor-blade longitudinal axis (17),
wherein the at least one connection element has a first and second end,
wherein the second end extends into the interior space,
wherein the connection element (7) extends through a through-hole (8) in the inner insert (5) and is secured in a blind hole (16) in the outer insert (6), wherein the first end of the connection element is arranged in the blind hole.

2. Wind-turbine rotor-blade according to Claim 1, **characterized in that** the outer insert (6) is at least partially laminated into the fibre-reinforced plastic of the rotor-blade outer portion (2), in particular laminated-in by means of a vacuum infusion process.

3. Wind-turbine rotor-blade according to any one of the preceding claims, **characterized in that** the inner insert (5) and/or the outer insert (6) are/is made of a cast material and/or of a metal.

4. Wind-turbine rotor-blade according to any one of the preceding claims, **characterized in that** the inner insert (5) has a wrap portion, which is completely wrapped in the rotor-blade inner portion (3), and a connecting inner portion that, together with the wrap portion, constitutes the inner insert (5), and in which the connecting element is accommodated.

5. Wind-turbine rotor-blade according to Claim 4, **characterized in that** a first interior space (15) is provided inside the rotor-blade inner portion (3), and the connecting inner portion (13) is arranged, at least partially, in the first interior space, in particular the connecting element (7) is arranged in the first or second interior space (15), in such a manner that the connecting element can be replaced.

6. Wind-turbine rotor-blade according to any one of the preceding claims, **characterized in that** the outer insert (6) has a lamination portion (12), which is completely laminated into the rotor-blade outer portion (2), and a connecting outer portion (14) that, together with the lamination portion (12), constitutes the outer insert (6), and in which the connecting element (7) is accommodated.

7. Wind-turbine rotor-blade according to any one of Claims 3 to 6, **characterized in that** there is an expansion sleeve arranged between the through-hole and the connecting element (7).

8. Wind turbine, having at least one rotor-blade according to any one of Claims 1 to 7, having at least one connecting device, preferably having three rotor-blades according to any one of Claims 1 to 7, each having at least one connecting device (4).

9. Method for connecting a rotor-blade inner portion (3) to a rotor-blade outer portion (2) of a rotor-blade of a wind turbine according to any one of Claims 1 to 7, comprising the steps:
- providing an outer insert (6), an inner insert (5) and at least one connecting element (7),
- at least partially laminating the outer insert (6) into the rotor-blade outer portion (2), and
- at least partially wrapping the inner insert (5) in the rotor-blade inner portion (3),
- connecting the rotor-blade inner portion (3) to the rotor-blade outer portion (2) by inserting the at least one connecting element (7) in the outer insert (6), via the inner insert (5), and fastening it in the outer insert (6),
wherein the inner insert (5) and the outer insert (6) being connected to each other via the inner and outer contact face (10, 20) and by at least one connecting device (4),
the inner contact face (10) and the outer contact face (20) being arranged parallelwise in relation to each other and forming a plane (30) that is at an angle (a) of > 30° and < 80°, in relation to the rotor-blade longitudinal axis (17),
wherein the at least one connection element has a first and second end,
wherein the second end extends into the interior space,
wherein the connection element (7) extends through a through-hole (8) in the inner insert (5) and is secured in a blind hole (16) in the outer insert (6), wherein the first end of the connection element is arranged in the blind hole.

## Revendications

1. Pale de rotor d'éolienne avec :
- un axe longitudinal de pale de rotor (17),
- au moins une section intérieure de pale de rotor (3) avec une zone de raccordement au moyeu de pale de rotor, et
- au moins une section extérieure de pale de rotor (2) avec une pointe de pale de rotor,
- un espace intérieur (15) à l'intérieur de la section intérieure de pale de rotor (3) et de la section extérieure de pale de rotor (2),
dans laquelle la section intérieure de pale de rotor (3) et la section extérieure de pale de rotor (2) sont fabriquées respectivement sensiblement à partir d'une matière plastique renforcée par des fibres, et
dans laquelle la section intérieure de pale de rotor (3) et la section extérieure de pale de rotor (2) sont reliées l'une à l'autre par au moins un dispositif de liaison (4), et dans laquelle
l'au moins un dispositif de liaison (4) comprend :
- un insert intérieur (5) avec une surface d'appui intérieure (10) enveloppé au moins en partie dans la matière plastique renforcée par des fibres de la section intérieure de pale de rotor (3),
- un insert extérieur (6) avec une surface d'appui extérieure (20) pratiqué au moins en partie dans la matière plastique renforcée par des fibres de la section extérieure de pale de rotor (2),
dans laquelle l'insert intérieur (5) et l'insert extérieur (6) sont reliés l'un à l'autre par l'intermédiaire de la surface d'appui intérieure et extérieure (10, 20) et d'au moins un élément de liaison (7),
dans laquelle la surface d'appui intérieure (10) et la surface d'appui extérieure (20) sont disposées de manière parallèle l'une par rapport à l'autre et forment un plan (30), dans laquelle
le plan (30) est disposé selon un angle (α) > 30° et < 80° par rapport à l'axe longitudinal de pale de rotor (17),
dans laquelle l'au moins un élément de liaison présente une première et une deuxième extrémité,
dans laquelle la deuxième extrémité s'étend à l'intérieur de l'espace intérieur,
dans laquelle l'élément de liaison (7) traverse un trou de passage (8) prévu dans l'insert intérieur (5) de part en part et est fixé dans un trou borgne (16) prévu dans l'insert extérieur (6), dans laquelle la première extrémité de l'élément de liaison est disposée dans le trou borgne.

2. Pale de rotor d'éolienne selon la revendication 1, **caractérisée en ce que** l'insert extérieur (6) est laminé au moins en partie dans la matière plastique renforcée par des fibres de la section extérieure de pale de rotor (2), en particulier est laminé par l'intermédiaire d'un procédé d'infusion sous vide.

3. Pale de rotor d'éolienne selon l'une quelconque des revendications précédentes, **caractérisée en ce que** l'insert intérieur (5) et/ou l'insert extérieur (6) sont fabriqués à partir d'un matériau de fonte et/ou à partir d'un métal.

4. Pale de rotor d'éolienne selon l'une quelconque des revendications précédentes, **caractérisée en ce que** l'insert intérieur (5) présente une section d'enroulement, qui est enroulée en totalité dans la section intérieure de pale de rotor (3), et présente une section intérieure de liaison, qui forme conjointement avec la section d'enroulement l'insert intérieur (5) et dans laquelle l'élément de liaison est logé.

5. Pale de rotor d'éolienne selon la revendication 4, **caractérisée en ce qu'**un espace intérieur (15) est prévu à l'intérieur de la section intérieure de pale de rotor (3), et la section intérieure de liaison (13) est disposée au moins en partie dans l'espace intérieur, en particulier l'élément de liaison (7) est disposé dans l'espace intérieur (15) de telle manière que l'élément de liaison peut être remplacé.

6. Pale de rotor d'éolienne selon l'une quelconque des revendications précédentes, **caractérisée en ce que** l'insert extérieur (6) présente une section de laminage (12), qui est laminée en totalité dans la section extérieure de pale de rotor (2), et présente une section extérieure de liaison (14), qui forme conjointement avec la section de laminage (12) l'insert extérieur (6) et dans laquelle l'élément de liaison (7) est logé.

7. Pale de rotor d'éolienne selon l'une quelconque des revendications 2 à 6, **caractérisée en ce qu'**une douille extensible est disposée entre le trou de passage et l'élément de liaison (7).

8. Eolienne avec au moins une pale de rotor selon l'une quelconque des revendications 1 à 7, avec au moins un dispositif de liaison (4), de préférence avec trois pales de rotor selon l'une quelconque des revendications 1 à 7, respectivement avec au moins un dispositif de liaison (4).

9. Procédé pour relier une section intérieure de pale de rotor (3) à une section extérieure de pale de rotor (2) d'une pale de rotor d'une éolienne selon l'une quelconque des revendications 1 à 7, comprenant les étapes :
- de fourniture d'un insert extérieur (6), d'un insert intérieur (5) et d'au moins un élément de liaison (7),
- de laminage au moins partiel de l'insert extérieur (6) dans la section extérieure de pale de rotor (2), et
- d'enroulement au moins partiel de l'insert intérieur (5) dans la section intérieure de pale de rotor (3),
- de liaison de la section intérieure de pale de rotor (3) à la section extérieure de pale de rotor (2) en introduisant l'au moins un élément de liaison (7) par l'intermédiaire de l'insert intérieur (5) dans l'insert extérieur (6) et de fixation dans l'insert extérieur (6), dans lequel l'insert intérieur (5) et l'insert extérieur (6) sont reliés l'un à l'autre par l'intermédiaire de la surface d'appui intérieure et extérieure (10, 20) et d'au moins un élément de liaison (7),
dans lequel la surface d'appui intérieure (10) et la surface d'appui extérieure (20) sont disposées de manière parallèle l'une par rapport à l'autre et forment un plan (30), dans lequel le plan (30) est disposé selon un angle (α) > 30° et < 80° par rapport à l'axe longitudinal de pale de rotor (17),
dans lequel l'au moins un élément de liaison présente une première et une deuxième extrémité,
dans lequel la deuxième extrémité s'étend à l'intérieur de l'espace intérieur,
dans lequel l'élément de liaison (7) traverse un trou de passage (8) prévu dans l'insert intérieur (5) de part en part et est fixé dans un trou borgne (16) prévu dans l'insert extérieur (6), dans lequel la première extrémité de l'élément de liaison est disposée dans le trou borgne.
